# EUROPEAN PATENT APPLICATION

(11) **EP 4 668 129 A1**
(43) Date of publication of application: **24.12.2025**
(21) Application number: 25174651.7
(22) Date of filing: 06.05.2025
(51) Int. Cl.: G06F 16/27

(54) **DATA PROCESSING METHODS AND APPARATUSES FOR DISTRIBUTED GRAPH DATABASE**

(30) Priority: 21.06.2024 CN 202410814594
(71) Applicant: Alipay (Hangzhou) Information Technology Co., Ltd., Hangzhou, Zhejiang 310000 (CN)
(72) Inventor: YUAN, Xiaohua, Hangzhou, Zhejiang, 310000 (CN)
(74) Representative: Fish & Richardson P.C.

(57) **Abstract**

Embodiments of this specification provide a data processing method and apparatus for a distributed graph database. In the data processing method for a distributed graph database, graph data of the distributed graph database are stored in a form of a shard in a storage node in a first cluster. The data processing method includes: determining to-be-backed-up graph data; determining at least one target storage node based on a correspondence between a graph data shard and a storage node, in the first cluster, in which the graph data shard is located; exporting several graph data shards in the target storage node to an intermediate storage device; and then storing the graph data exported to the intermediate storage device in at least one storage node in a second cluster based on a correspondence between the graph data shard and a storage node, in the second cluster, in which the graph data shard is to be stored.

## Description

### TECHNICAL FIELD

Embodiments of this specification generally relate to the field of computer technologies, and in particular, to data processing methods and apparatuses for a distributed graph database.

### BACKGROUND

With rapid development of Internet technologies and a continuous increase in a data scale, distributed graph databases are increasingly widely applied. Various data processing methods (for example, data backup and restoration) for the distributed graph databases are of great significance for ensuring security and reliability of data services.

### SUMMARY

In view of the above-mentioned descriptions, embodiments of this specification provide data processing methods and apparatuses for a distributed graph database. According to the methods and the apparatuses, more flexible, practical, and efficient data backup can be implemented.

According to an aspect of the embodiments of this specification, a data processing method for a distributed graph database is provided. Graph data of the distributed graph database are stored in a form of a shard in a storage node in a first cluster. The data processing method includes: determining to-be-backed-up graph data, where the to-be-backed-up graph data include several graph data shards; determining at least one target storage node in which the several graph data shards are located from the storage node in the first cluster based on first graph topology structure information, where the first graph topology structure information includes a correspondence between a graph data shard and a storage node, in the first cluster, in which the graph data shard is located; exporting the several graph data shards in the target storage node to an intermediate storage device; and storing the graph data exported to the intermediate storage device in at least one storage node in a second cluster based on second graph topology structure information, where the second graph topology structure information includes a correspondence between the graph data shard and a storage node, in the second cluster, in which the graph data shard is to be stored.

According to another aspect of the embodiments of this specification, a data processing apparatus for a distributed graph database is provided. Graph data of the distributed graph database are stored in a form of a shard in a storage node in a first cluster. The data processing apparatus includes: a node determining unit, configured to: determine to-be-backed-up graph data, where the to-be-backed-up graph data include several graph data shards; and determine at least one target storage node in which the several graph data shards are located from the storage node in the first cluster based on first graph topology structure information, where the first graph topology structure information includes a correspondence between a graph data shard and a storage node, in the first cluster, in which the graph data shard is located; a data export unit, configured to export the several graph data shards in the target storage node to an intermediate storage device; and a data import unit, configured to store the graph data exported to the intermediate storage device in at least one storage node in a second cluster based on second graph topology structure information, where the second graph topology structure information includes a correspondence between the graph data shard and a storage node, in the second cluster, in which the graph data shard is to be stored.

According to another aspect of the embodiments of this specification, a data processing apparatus for a distributed graph database is provided, including at least one processor and a storage coupled to the at least one processor. The storage stores instructions, and when the instructions are executed by the at least one processor, the at least one processor is enabled to perform the above-mentioned data processing method for a distributed graph database.

According to another aspect of the embodiments of this specification, a computer-readable storage medium is provided. The computer-readable storage medium stores a computer program, and when the computer program is executed by a processor, the above-mentioned data processing method for a distributed graph database is implemented.

According to another aspect of the embodiments of this specification, a computer program product is provided, and includes a computer program. The computer program is executed by a processor to implement the above-mentioned data processing method for a distributed graph database.

### BRIEF DESCRIPTION OF DRAWINGS

The essence and advantages of the content of this specification can be further understood by referring to the following accompanying drawings. In the accompanying drawings, similar components or features can have the same reference numerals.
FIG. 1 shows an example architecture illustrating a data processing method and apparatus for a distributed graph database, according to embodiments of this specification;
FIG. 2 is a flowchart illustrating an example of a data processing method for a distributed graph database, according to embodiments of this specification;
FIG. 3 is a flowchart illustrating an example of a determining process of a target node group, according to embodiments of this specification;
FIG. 4 is a schematic diagram illustrating another example of a data processing method for a distributed graph database, according to embodiments of this specification;
FIG. 5 is a block diagram illustrating an example of a data processing apparatus for a distributed graph database, according to embodiments of this specification; and
FIG. 6 is a schematic diagram illustrating an example of a data processing apparatus for a distributed graph database, according to embodiments of this specification.

### DESCRIPTION OF EMBODIMENTS

The subject matter described in this specification is discussed below with reference to example implementations. It should be understood that these implementations are merely discussed to enable a person skilled in the art to better understand and implement the subject matter described in this specification, and are not intended to limit the protection scope, applicability, or examples described in the claims. The functions and arrangements of the elements under discussion can be changed without departing from the protection scope of the content of the embodiments of this specification. Various processes or components can be omitted, replaced, or added in the examples as needed. In addition, features described for some examples can also be combined in other examples.

As used in this specification, the term "include" and variants thereof represent open terms, meaning "including but not limited to". The term "based on" means "at least partially based on". The terms "one embodiment" and "an embodiment" mean "at least one embodiment". The term "another embodiment" means "at least one other embodiment". The terms "first", "second", etc. can refer to different or same objects. Other definitions, whether explicit or implicit, can be included below. Unless expressly specified in the context, the definition of a term is consistent throughout this specification.

The following describes in detail the data processing methods and apparatuses for a distributed graph database according to embodiments of this specification with reference to the accompanying drawings.

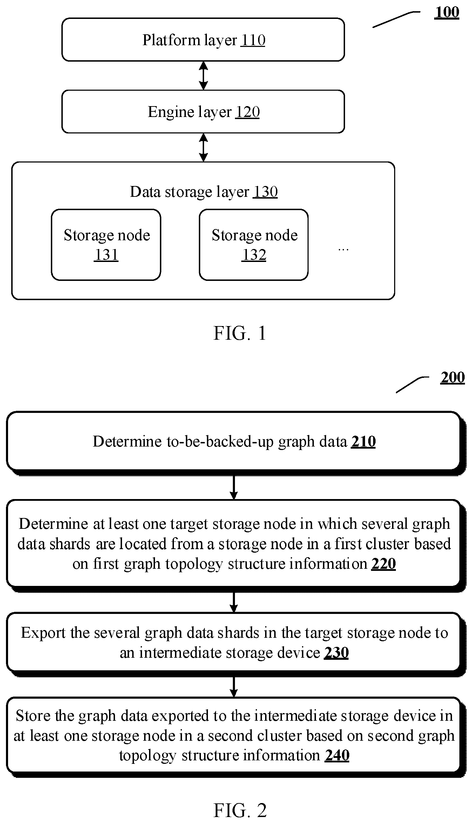

FIG. 1 shows an example architecture 100 illustrating a data processing method and apparatus for a distributed graph database, according to embodiments of this specification.

As shown in FIG. 1, the architecture 100 for a distributed graph database can include a platform layer 110, an engine layer 120, and a data storage layer 130. The platform layer 110 can be configured to interact with an external device of the distributed graph database. For example, the platform layer 110 can receive various requests initiated by a user for the distributed graph database, for example, a read/write request, a query request, and a backup request for graph data. The engine layer 120 can be configured to store and maintain metadata of the distributed graph database. In some examples, the engine layer 120 can be further configured to perform various types of analysis and calculation, for example, perform a query operation, an update operation, or another operation based on data stored at the storage layer 130.

The storage layer 130 can include a plurality of storage nodes, for example, nodes 131 and 132. In some examples, the graph data stored in the distributed graph database can have a plurality of replicas, each of the replicas can refer to a piece of complete graph data. In some examples, the replica can be split into shards, and the plurality of storage nodes respectively store at least some obtained shards, so that the graph data shards stored in the plurality of storage nodes can be combined into a complete replica.

It should be understood that all network entities shown in FIG. 1 are examples. Based on specific application needs, the architecture 100 can include any other network entity.

FIG. 2 is a flowchart illustrating a data processing method 200 for a distributed graph database, according to embodiments of this specification.

As shown in FIG. 2, in 210, to-be-backed-up graph data are determined.

In this embodiment, the to-be-backed-up graph data can include several graph data shards. In this embodiment, graph data of the distributed graph database can be stored in a form of a shard in a storage node in a first cluster. Several graph data shards can be determined from graph data shards stored in the storage node in the first cluster, to form the to-be-backed-up graph data.

In some examples, data content corresponding to each shard can be obtained by performing a hash operation on data identifiers (for example, VID) corresponding to each piece of node data and edge data. In some examples, for each graph data replica, data identifiers corresponding to each piece of node data and edge data of the replica can be converted into hash values by using a hash algorithm, and then each piece of data is allocated to a different shard based on the obtained hash value, to obtain the data content included in each shard.

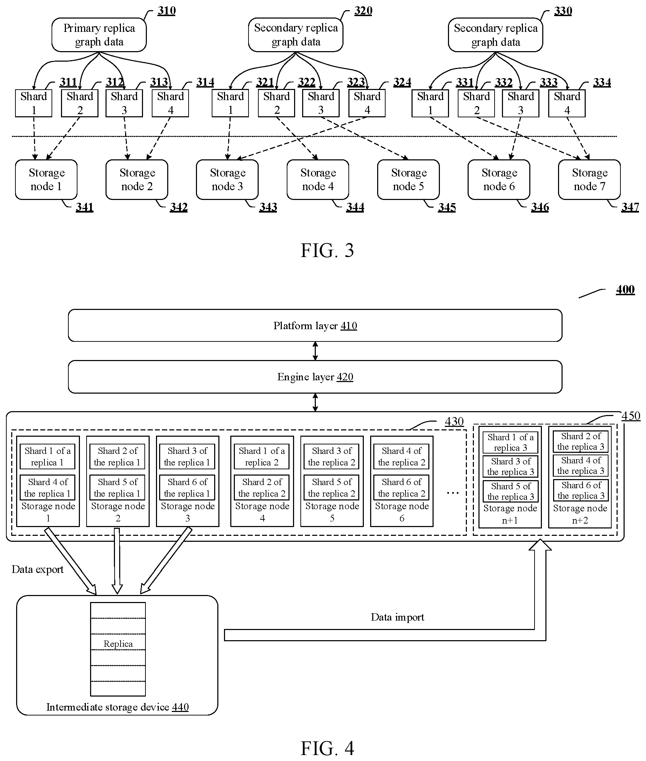

FIG. 3 is a schematic diagram illustrating an example 300 in which graph data of a distributed graph database are stored in a form of a shard in a storage node in a first cluster, according to embodiments of this specification.

As shown in FIG. 3, the graph data of the distributed graph database can include primary replica graph data 310 and secondary replica graph data 320 and 330. In some examples, the primary replica graph data 310 can include several primary replica graph data shards (for example, 311 to 314), the secondary replica graph data 320 can include several secondary replica graph data shards (for example, 321 to 324), and the secondary replica graph data 330 can include several secondary replica graph data shards (for example, 331 to 334). In some examples, the to-be-backed-up graph data can include the primary replica graph data shard (for example, 311 to 314). In some examples, the to-be-backed-up graph data can include the secondary replica graph data shards (for example, 321 to 324, 331 to 334, or 321 to 323 and 334). In some examples, the to-be-backed-up graph data can include some primary replica graph data shards and some secondary replica graph data shards (for example, 311 and 322 to 324 or 311 and 312, 323, and 334).

Referring back to FIG. 2, in 220, at least one target storage node in which the several graph data shards are located is determined from the storage node in the first cluster based on first graph topology structure information.

In this embodiment, the first graph topology structure information can include a correspondence between a graph data shard and a storage node, in the first cluster, in which the graph data shard is located. In some examples, the first graph topology structure information can be "storage node 1 - first shard and third shard and storage node 2 - second shard and fourth shard". The storage node 1 and the storage node 2 can be storage nodes in the first cluster. In some examples, the first graph topology structure information can be used as one of pieces of metadata of the distributed graph database, and is stored and maintained at an engine layer. In some examples, the graph data shard can be distinguished based on a shard identifier, included data content, etc. In some examples, graph data shard metadata can also be used as one of pieces of metadata of the distributed graph database, and is stored and maintained at the engine layer. In some examples, the graph data shard metadata can include, for example, a shard name, an identifier, a data volume size, metadata information of an included data block, and a replica to which the shard belongs.

In some examples, when the graph data include primary replica graph data and secondary replica graph data, the first graph topology structure information can be used to indicate a correspondence between a graph data shard of the primary replica graph data or the secondary replica graph data and a storage node, in the first cluster, in which the graph data shard is located. As shown in FIG. 3, the first graph topology structure information can be used to indicate the following correspondences: a correspondence between the storage node 1 (shown by 341 in FIG. 3) in the first cluster and both a shard 1 (shown by 311 in FIG. 3) and a shard 2 (shown by 312 in FIG. 3) of the primary replica graph data 310, a correspondence between the storage node 2 (shown by 342 in FIG. 3) in the first cluster and both a shard 3 (shown by 313 in FIG. 3) and a shard 4 (shown by 314 in FIG. 3) of the primary replica graph data 310, a correspondence between a storage node 3 (shown by 343 in FIG. 3) in the first cluster and both a shard 1 (shown by 321 in FIG. 3) and a shard 4 (shown by 324 in FIG. 3) of the secondary replica graph data 320, a correspondence between a storage node 4 (shown by 344 in FIG. 3) in the first cluster and a shard 2 (shown by 322 in FIG. 3) of the secondary replica graph data 320, a correspondence between a storage node 5 (shown by 345 in FIG. 3) in the first cluster and a shard 3 (shown by 323 in FIG. 3) of the secondary replica graph data 320, a correspondence between a storage node 6 (shown by 346 in FIG. 3) in the first cluster and both a shard 1 (shown by 331 in FIG. 3) and a shard 3 (shown by 333 in FIG. 3) of the secondary replica graph data 330, and a correspondence between a storage node 7 (shown by 347 in FIG. 3) in the first cluster and both a shard 2 (shown by 332 in FIG. 3) and a shard 4 (shown by 334 in FIG. 3) of the secondary replica graph data 330.

In some examples, the several graph data shards can be secondary replica graph data shards, and therefore the target storage node can be a storage node that stores the secondary replica graph data shards. In some examples, the target storage node can be the storage node 6 and the storage node 7 in the first cluster in the above-mentioned example.

In some examples, the at least one target storage node in which the several graph data shards are located can be further determined from the storage node in the first cluster based on location information of the storage node in the first cluster and location information of an intermediate storage device.

In these examples, the location information can be used to indicate a location of a physical machine corresponding to the storage node or the intermediate storage device. In some examples, for a plurality of graph data shards, a storage node closest to the intermediate storage device in a storage node in which the graph data shards are located can be used as the target storage node based on the location information.

In some examples, the at least one target storage node in which the several graph data shards are located can be further determined from the storage node in the first cluster based on a load status of the storage node in the first cluster.

In these examples, the load status of the storage node can include but is not limited to at least one of the following: a read load status and a write load status. In some examples, node load information used to indicate the load status can be used as one of pieces of metadata of the distributed graph database, and is stored and maintained at the engine layer. In some examples, for a plurality of graph data shards, a storage node with a lighter read load in a storage node in which the graph data shards are located can be determined as the target storage node.

In some examples, the at least one target storage node in which the several graph data shards are located can be further determined from the storage node in the first cluster based on location information of the storage node in the first cluster, location information of an intermediate storage device, and a load status of the storage node. In these examples, a distance between the storage node and the intermediate storage device and the load status of the storage node can be comprehensively considered to determine the at least one target storage node.

In an example, each storage node in the first cluster stores only a graph data shard of a specified replica and does not store graph data shards across different replicas. A load level of each piece of secondary replica graph data can be determined based on the first graph topology structure information and a load status of a corresponding storage node. For example, for each piece of secondary replica graph data, the load status of the storage node is comprehensively calculated on a replica basis based on a load status of a storage node in which each graph data shard of the secondary replica graph data is located, to obtain the load level of each piece of secondary replica graph data. Then, target secondary replica graph data are determined based on the determined load level. For example, secondary replica graph data with the lowest load level can be determined as the target secondary replica graph data. For another example, the target secondary replica graph data can be determined randomly or with reference to another factor from several pieces of secondary replica graph data with a lighter load level. If each graph data shard of the determined target secondary replica graph data satisfies a backup condition, all the graph data shards of the target secondary replica graph data can be determined as the several graph data shards included in the to-be-backed-up graph data. If there is no graph data shard that satisfies a backup condition in a graph data shard of the determined target secondary replica graph data, an alternative graph data shard can be selected from another replica, so that a graph data shard, of the target secondary replica graph data, that satisfies the backup condition and the alternative graph data shard are determined as the several graph data shards included in the to-be-backed-up graph data. In some examples, a graph data shard that does not satisfy the backup condition can be, for example, a graph data shard stored in a storage node whose load exceeds a threshold. It can be understood that data content included in the alternative graph data shard includes at least data content included in the graph data shard that does not satisfy the backup condition.

In the above-mentioned manner, in this solution, a manner of determining the target storage node can be further optimized by using the location information of the storage node, the location information of the intermediate storage device, and the load status of the storage node, to fully use computing resources and reduce cross-area communication overheads.

Referring back to FIG. 2, in 230, the several graph data shards in the target storage node are exported to the intermediate storage device.

In some examples, the intermediate storage device can be a remote storage device, for example, a network file system (NFS) or an object storage service (OSS). In some examples, data shard-related information can be removed when the several shards in the target storage node are exported to the intermediate storage device, to obtain a complete graph data replica. In some examples, the data shard-related information can include, for example, information used to mark a start/end location of a data shard.

In 240, the graph data exported to the intermediate storage device are stored in at least one storage node in a second cluster based on second graph topology structure information.

In this embodiment, the second graph topology structure information can include a correspondence between the graph data shard and a storage node, in the second cluster, in which the graph data shard is to be stored. The first cluster and the second cluster can be the same cluster, or can be different clusters. In some examples, when the second cluster is different from the first cluster, a quantity of storage nodes in the second cluster can be the same as or different from a quantity of storage nodes in the first cluster.

In some examples, a quantity of graph data shards in the second graph topology structure information is the same as a quantity of graph data shards in the first graph topology structure information, and a quantity of storage nodes in the second cluster in the second graph topology structure information is different from a quantity of storage nodes in the first cluster in the first graph topology structure information. In these examples, the several graph data shards in the to-be-backed-up graph data can be redeployed to the at least one storage node in the second cluster based on the second graph topology structure information.

In some examples, a quantity of graph data shards in the second graph topology structure information is different from a quantity of graph data shards in the first graph topology structure information, and a quantity of storage nodes in the second cluster in the second graph topology structure information is the same as or different from a quantity of storage nodes in the first cluster in the first graph topology structure information. In these examples, the to-be-backed-up graph data exported to the intermediate storage device can be split into shards again. For example, splitting into shards is performed again based on the several graph data shards exported to the intermediate storage device, or the several graph data shards exported to the intermediate storage device are first integrated into complete graph data and then splitting into shards is performed again. Therefore, graph data shards that are in the to-be-backed-up graph data and that are obtained after splitting into shards is performed again can be redeployed to the at least one storage node in the second cluster based on the second graph topology structure information.

FIG. 4 is a schematic diagram illustrating another example of a data processing method 400 for a distributed graph database, according to embodiments of this specification.

As shown in FIG. 4, first topology structure information can be used to indicate a correspondence between a graph data shard and a storage node, in a first cluster 430, in which the graph data shard is located. In an example, a storage node 1 stores a shard 1 and a shard 4 of primary replica graph data 1 (briefly referred to as "replica 1" in FIG. 4), a storage node 2 stores a shard 2 and a shard 5 of the primary replica graph data 1, and a storage node 3 stores a shard 3 and a shard 6 of the primary replica graph data 1. In some examples, graph data shards of different replicas can be differently distributed on corresponding storage nodes. For example, a storage node 4 stores a shard 1 and a shard 2 of secondary replica graph data 2 (briefly referred to as "replica 2" in FIG. 4), a storage node 5 stores a shard 3 and a shard 5 of the secondary replica graph data 2, and a storage node 6 stores a shard 4 and a shard 6 of the secondary replica graph data 2. The shards can be obtained by splitting the graph data into shards. In some examples, the first topology structure information can be stored and maintained at an engine layer 420.

A platform layer 410 can receive a data backup request. In some examples, the primary replica graph data 1 can be determined as to-be-backed-up graph data. Then, at least one target storage node (for example, the storage node 1 to the storage node 3) in which several graph data shards (for example, the shard 1 to the shard 6) of the primary replica graph data 1 are located can be determined from the storage node in the first cluster 430 based on the first graph topology structure information. Then, the several graph data shards (for example, the shard 1 to the shard 6) of the primary replica graph data 1 can be exported to an intermediate storage device 440, so that the intermediate storage device 440 stores a complete graph data replica.

Subsequently, the platform layer 410 can further receive a data restoration request for the stored graph data replica. In some examples, second graph topology structure information can be determined based on the data restoration request. The second graph topology information can include a correspondence between the graph data shard and a storage node, in a second cluster, in which the graph data shard is to be stored. In some examples, the second graph topology structure information can indicate a correspondence between a storage node n+1 in a second cluster 450 and all of a shard 1, a shard 3, and a shard 5 of graph data and a correspondence between a storage node n+2 and all of a shard 2, a shard 4, and a shard 6 of the graph data 1. The graph data exported to the intermediate storage device 440 can be stored in at least one storage node in the second cluster 450 based on the second graph topology structure information.

It can be understood that because a quantity of storage nodes included in the second cluster and the second graph topology structure information are not necessarily the same as a quantity of storage nodes included in the first cluster and the first graph topology structure information, distribution of data shards of a graph data replica imported to storage nodes in the second cluster can be the same as or different from distribution of the data shards indicated by the first graph topology structure information.

In some implementations, the intermediate storage device 440 can include a cloud storage. The cloud storage can have an area identifier of an area in which a serving node is located. The at least one target storage node can be determined based on an area indicated by location information of each storage node in the first cluster 430 and an area indicated by location information of the intermediate storage device 440. In an example, if the area indicated by the location information of the intermediate storage device 440 is an area A, an area indicated by location information of the storage node 1, the storage node 3, and the storage node 5 in the first cluster 430 is the area A, and an area indicated by location information of the storage node 2, the storage node 4, and the storage node 6 is an area B, when a shard status of the primary replica graph data 1 stored in the storage node 1 to the storage node 3 is the same as a shard status of the secondary replica graph data 2 stored in the storage node 4 to the storage node 6, the storage node 1, the storage node 3, and the storage node 5 can be determined as target storage nodes.

In the above-mentioned manner, cross-area network overheads in a data backup and data restoration process can be effectively reduced.

According to the data processing method for a distributed graph database disclosed in FIG. 1 to FIG. 4, the determined to-be-backed-up graph data are completely exported from the target storage node determined based on the correspondence between the graph data shard and the storage node, in the first cluster, in which the graph data shard is located to the intermediate storage device, and then the graph data exported to the intermediate storage device are stored in the storage node in the second cluster based on the correspondence between the graph data shard and the storage node, in the second cluster, in which the graph data shard is to be stored. Therefore, it is innovatively proposed to decouple a data export (backup) process and a data import (restoration) process by using a stored complete data replica. Compared with a conventional solution in which each data shard is directly copied and then restored to a new cluster based on a cluster topology of a current distributed system, in this solution, a topology structure of a cluster (that is, the second cluster) for data import is independent of a topology structure of an original cluster (that is, the first cluster) in the data import process, and the topology structures of the clusters do not need to be completely consistent based on data copy needs, thereby providing a more flexible, practical, and efficient solution for data processing.

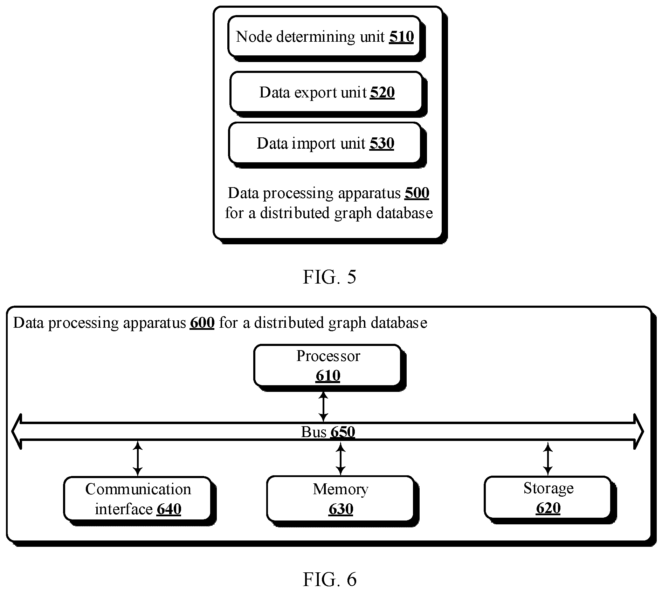

FIG. 5 is a block diagram illustrating an example of a data processing apparatus 500 for a distributed graph database, according to embodiments of this specification. The apparatus embodiment can correspond to the method embodiments shown in FIG. 2 to FIG. 4, and the apparatus can be specifically applied to various electronic devices.

As shown in FIG. 5, the data processing apparatus 500 for a distributed graph database can include a node determining unit 510, a data export unit 520, and a data import unit 530.

The node determining unit 510 is configured to: determine to-be-backed-up graph data, where the to-be-backed-up graph data include several graph data shards; and determine at least one target storage node in which the several graph data shards are located from a storage node in a first cluster based on first graph topology structure information, where the first graph topology structure information includes a correspondence between a graph data shard and a storage node, in the first cluster, in which the graph data shard is located. For operations of the node determining unit 510, references can be made to the operations in 210 and 220 described in FIG. 2.

In some examples, graph data of the distributed graph database include primary replica graph data and secondary replica graph data. The primary replica graph data include several primary replica graph data shards. The secondary replica graph data include several secondary replica graph data shards. The at least one target storage node that is determined from the storage node in the first cluster and in which the several graph data shards are located is a storage node that stores the secondary replica graph data shards.

In some examples, the node determining unit 510 is further configured to determine the at least one target storage node in which the several graph data shards are located from the storage node in the first cluster based on location information of the storage node in the first cluster and location information of an intermediate storage device.

In some examples, the node determining unit 510 is further configured to determine the at least one target storage node in which the several graph data shards are located from the storage node in the first cluster based on a load status of the storage node in the first cluster.

The data export unit 520 is configured to export the several graph data shards in the target storage node to the intermediate storage device. For an operation of the data export unit 520, references can be made to the operation in 230 described in FIG. 2.

The data import unit 530 is configured to store the graph data exported to the intermediate storage device in at least one storage node in a second cluster based on second graph topology structure information, where the second graph topology structure information includes a correspondence between the graph data shard and a storage node, in the second cluster, in which the graph data shard is to be stored. For an operation of the data import unit 530, references can be made to the operation in 240 described in FIG. 2.

In some examples, a quantity of graph data shards in the second graph topology structure information is the same as a quantity of graph data shards in the first graph topology structure information, and a quantity of storage nodes in the second cluster in the second graph topology structure information is different from a quantity of storage nodes in the first cluster in the first graph topology structure information.

In some examples, a quantity of graph data shards in the second graph topology structure information is different from a quantity of graph data shards in the first graph structure information, and a quantity of storage nodes in the second graph topology structure information is the same as or different from a quantity of storage nodes in the first graph topology structure information.

It is worthwhile to note that for operations of the node determining unit 510, the data export unit 520, and the data import unit 530, references can be made to the corresponding operations described in the above-mentioned embodiments in FIG. 2 to FIG. 4. Details are omitted here for simplicity.

The embodiments of the data processing method and apparatus for a distributed graph database according to the embodiments of this specification are described above with reference to FIG. 1 to FIG. 5.

The data processing apparatus for a distributed graph database in the embodiments of this specification can be implemented by using hardware, or can be implemented by using software or a combination of hardware and software. Software implementation is used as an example. As a logical apparatus, the apparatus is formed by reading corresponding computer program instructions in a storage to a memory by a processor of a device in which the apparatus is located. In the embodiments of this specification, the data processing apparatus for a distributed graph database can be implemented by using, for example, an electronic device.

FIG. 6 is a schematic diagram illustrating an example of a data processing apparatus 600 for a distributed graph database, according to embodiments of this specification.

As shown in FIG. 6, the data processing apparatus 600 for a distributed graph database can include at least one processor 610, a storage (for example, a non-volatile memory) 620, a memory 630, and a communication interface 640, and the at least one processor 610, the storage 620, the memory 630, and the communication interface 640 are connected together through a bus 650. The at least one processor 610 executes at least one computer-readable instruction (that is, the above-mentioned element implemented in a software form) stored or encoded in the storage.

In embodiments, the storage stores computer-executable instructions, and when the computer-executable instructions are executed, the at least one processor 610 is enabled to perform the following operations: determining to-be-backed-up graph data, where the to-be-backed-up graph data include several graph data shards; determining at least one target storage node in which the several graph data shards are located from a storage node in a first cluster based on first graph topology structure information, where the first graph topology structure information includes a correspondence between a graph data shard and a storage node, in the first cluster, in which the graph data shard is located; exporting the several graph data shards in the target storage node to an intermediate storage device; and storing the graph data exported to the intermediate storage device in at least one storage node in a second cluster based on second graph topology structure information, where the second graph topology structure information includes a correspondence between the graph data shard and a storage node, in the second cluster, in which the graph data shard is to be stored.

It should be understood that when the computer-executable instructions stored in the storage are executed, the at least one processor 610 is enabled to perform the operations and functions described above with reference to FIG. 1 to FIG. 4 in the embodiments of this specification.

According to an embodiment, a program product such as a computer-readable medium is provided. The computer-readable medium can have instructions (namely, the above-mentioned element implemented in a software form). When the instructions are executed by a computer, the computer is enabled to perform the operations and functions described above with reference to FIG. 1 to FIG. 4 in the embodiments of this specification.

Specifically, a system or an apparatus equipped with a readable storage medium can be provided, and software program code for implementing the functions in any of the above-mentioned embodiments is stored in the readable storage medium, so that a computer or a processor of the system or the apparatus reads and executes the instructions stored in the readable storage medium.

In this case, the program code read from the readable medium can implement the function in any one of the above-mentioned embodiments. Therefore, the machine-readable code and the readable storage medium storing the machine-readable code form a part of this specification.

Computer program code needed for operation of each part of this specification can be compiled in any one or more programming languages, including an object-oriented programming language such as Java, Scala, Smalltalk, Eiffel, JADE, Emerald, C++, C#, VB, NET, and Python, a conventional programming language such as a C language, Visual Basic 2003, Perl, COBOL 2002, PHP, and ABAP, a dynamic programming language such as Python, Ruby, and Groovy, or another programming language. The program code can run on a user computer, or run as a standalone software package on the user computer, or partially run on the user computer and partially run on a remote computer, or completely run on the remote computer or a server. In the latter case, the remote computer can be connected to the user computer in any form of network, such as a local area network (LAN) or a wide area network (WAN), or connected to an external computer (for example, via the Internet), or in a cloud computing environment, or used as a service, such as software as a service (SaaS).

Embodiments of the readable storage medium include a floppy disk, a hard disk, a magneto-optical disk, an optical disc (such as a CD-ROM, a CD-R, a CD-RW, a DVD-ROM, a DVD-RAM, a DVD-RW, and a DVD-RW), a magnetic tape, a nonvolatile memory card, and a ROM. Alternatively, the program code can be downloaded from a server computer or a cloud through a communication network.

Specific embodiments of this specification are described above. Other embodiments fall within the scope of the appended claims. In some cases, the actions or steps described in the claims can be performed in a sequence different from that in the embodiments and desired results can still be achieved. In addition, the process depicted in the accompanying drawings does not necessarily need a particular sequence or consecutive sequence to achieve the desired results. In some implementations, multi-tasking and parallel processing are feasible or may be advantageous.

Not all steps and units in the above-mentioned procedures and system structure diagrams are necessary. Some steps or units can be ignored based on actual needs. An execution sequence of the steps is not fixed, and can be determined as needed. The apparatus structure described in the above-mentioned embodiments can be a physical structure, or can be a logical structure. That is, some units can be implemented by the same physical entity, or some units can be implemented by a plurality of physical entities, or can be implemented together by some components in a plurality of independent devices.

The term "example" used throughout this specification means "used as an example, an instance, or an illustration" and does not mean "preferred" or "advantageous" over other embodiments. Specific implementations include specific details for the purpose of providing an understanding of the described technologies. However, these technologies can be implemented without these specific details. In some instances, well-known structures and apparatuses are shown in block diagram forms, to avoid difficulty in understanding the concept in the described embodiments.

Optional implementations of the embodiments of this specification are described above in detail with reference to the accompanying drawings. However, the embodiments of this specification are not limited to specific details in the above-mentioned implementations. Within a technical concept scope of the embodiments of this specification, a plurality of simple variations can be made to the technical solutions in the embodiments of this specification, and these simple variations all fall within the protection scope of the embodiments of this specification.

The above-mentioned descriptions of the content in this specification are provided to enable any person of ordinary skill in the art to implement or use the content in this specification. It is clear to a person of ordinary skill in the art that various modifications can be made to the content in this specification. In addition, the general principle defined in this specification can be applied to another variant without departing from the protection scope of the content in this specification. Therefore, the content in this specification is not limited to the examples and designs described here, but aligns with the broadest scope of principles and novelty features that conform to this disclosure.

### EXAMPLES

1. A data processing method for a distributed graph database, wherein graph data of the distributed graph database are stored in a form of a shard in a storage node in a first cluster, and the data processing method comprises:
   determining to-be-backed-up graph data, wherein the to-be-backed-up graph data comprise several graph data shards;
   determining at least one target storage node in which the several graph data shards are located from the storage node in the first cluster based on first graph topology structure information, wherein the first graph topology structure information comprises a correspondence between a graph data shard and a storage node, in the first cluster, in which the graph data shard is located;
   exporting the several graph data shards in the target storage node to an intermediate storage device; and
   storing the graph data exported to the intermediate storage device in at least one storage node in a second cluster based on second graph topology structure information, wherein the second graph topology structure information comprises a correspondence between the graph data shard and a storage node, in the second cluster, in which the graph data shard is to be stored.
2. The data processing method according to example 1, wherein the graph data of the distributed graph database comprise primary replica graph data and secondary replica graph data, the primary replica graph data comprise several primary replica graph data shards, and the secondary replica graph data comprise several secondary replica graph data shards; and
   the at least one target storage node that is determined from the storage node in the first cluster and in which the several graph data shards are located is a storage node that stores the secondary replica graph data shards.
3. The data processing method according to example 1, wherein the data processing method further comprises:
   determining the at least one target storage node in which the several graph data shards are located from the storage node in the first cluster based on location information of the storage node in the first cluster and location information of the intermediate storage device.
4. The data processing method according to example 1, wherein the data processing method further comprises:
   determining the at least one target storage node in which the several graph data shards are located from the storage node in the first cluster based on a load status of the storage node in the first cluster.
5. The data processing method according to example 1, wherein a quantity of graph data shards in the second graph topology structure information is the same as a quantity of graph data shards in the first graph topology structure information, and a quantity of storage nodes in the second cluster in the second graph topology structure information is different from a quantity of storage nodes in the first cluster in the first graph topology structure information.
6. The data processing method according to example 1, wherein a quantity of graph data shards in the second graph topology structure information is different from a quantity of graph data shards in the first graph structure information, and a quantity of storage nodes in the second graph topology structure information is the same as or different from a quantity of storage nodes in the first graph topology structure information.
7. A data processing apparatus for a distributed graph database, wherein graph data of the distributed graph database are stored in a form of a shard in a storage node in a first cluster, and the data processing apparatus comprises:
   a node determining unit, configured to: determine to-be-backed-up graph data, wherein the to-be-backed-up graph data comprise several graph data shards; and determine at least one target storage node in which the several graph data shards are located from the storage node in the first cluster based on first graph topology structure information, wherein the first graph topology structure information comprises a correspondence between a graph data shard and a storage node, in the first cluster, in which the graph data shard is located;
   a data export unit, configured to export the several graph data shards in the target storage node to an intermediate storage device; and
   a data import unit, configured to store the graph data exported to the intermediate storage device in at least one storage node in a second cluster based on second graph topology structure information, wherein the second graph topology structure information comprises a correspondence between the graph data shard and a storage node, in the second cluster, in which the graph data shard is to be stored.
8. The data processing apparatus according to example 7, wherein the graph data of the distributed graph database comprise primary replica graph data and secondary replica graph data, the primary replica graph data comprise several primary replica graph data shards, and the secondary replica graph data comprise several secondary replica graph data shards; and
   the at least one target storage node that is determined from the storage node in the first cluster and in which the several graph data shards are located is a storage node that stores the secondary replica graph data shards.
9. The data processing apparatus according to example 7, wherein the node determining unit is further configured to:
   determine the at least one target storage node in which the several graph data shards are located from the storage node in the first cluster based on location information of the storage node in the first cluster and location information of the intermediate storage device.
10. The data processing apparatus according to example 7, wherein the node determining unit is further configured to:
   determine the at least one target storage node in which the several graph data shards are located from the storage node in the first cluster based on a load status of the storage node in the first cluster.
11. A data processing apparatus for a distributed graph database, comprising at least one processor, a storage coupled to the at least one processor, and a computer program stored in the storage, wherein the at least one processor executes the computer program to implement the data processing method for a distributed graph database according to any one of examples 1 to 6.

## Claims

1. A method for data processing for a distributed graph database, wherein graph data of the distributed graph database are stored in a form of a shard in a storage node in a first cluster, and the data processing method comprises:
determining to-be-backed-up graph data, wherein the to-be-backed-up graph data comprise several graph data shards;
determining at least one target storage node in which the several graph data shards are located from the storage node in the first cluster based on first graph topology structure information, wherein the first graph topology structure information comprises a correspondence between a graph data shard and a storage node, in the first cluster, in which the graph data shard is located;
exporting the several graph data shards in the target storage node to an intermediate storage device; and
storing the graph data exported to the intermediate storage device in at least one storage node in a second cluster based on second graph topology structure information, wherein the second graph topology structure information comprises a correspondence between the graph data shard and a storage node, in the second cluster, in which the graph data shard is to be stored.

2. The method according to claim 1, wherein the graph data of the distributed graph database comprise primary replica graph data and secondary replica graph data, the primary replica graph data comprise several primary replica graph data shards, and the secondary replica graph data comprise several secondary replica graph data shards; and
the at least one target storage node that is determined from the storage node in the first cluster and in which the several graph data shards are located is a storage node that stores the secondary replica graph data shards.

3. The method according to claim 1, further comprising:
determining the at least one target storage node in which the several graph data shards are located from the storage node in the first cluster based on location information of the storage node in the first cluster and location information of the intermediate storage device.

4. The method according to claim 1, further comprising:
determining the at least one target storage node in which the several graph data shards are located from the storage node in the first cluster based on a load status of the storage node in the first cluster.

5. The method according to claim 1, wherein a quantity of graph data shards in the second graph topology structure information is the same as a quantity of graph data shards in the first graph topology structure information, and a quantity of storage nodes in the second cluster in the second graph topology structure information is different from a quantity of storage nodes in the first cluster in the first graph topology structure information.

6. The method according to claim 1, wherein a quantity of graph data shards in the second graph topology structure information is different from a quantity of graph data shards in the first graph structure information, and a quantity of storage nodes in the second graph topology structure information is the same as or different from a quantity of storage nodes in the first graph topology structure information.

7. An apparatus for data processing for a distributed graph database, wherein graph data of the distributed graph database are stored in a form of a shard in a storage node in a first cluster, and the data processing apparatus comprises:
a node determining unit, configured to: determine to-be-backed-up graph data, wherein the to-be-backed-up graph data comprise several graph data shards; and determine at least one target storage node in which the several graph data shards are located from the storage node in the first cluster based on first graph topology structure information, wherein the first graph topology structure information comprises a correspondence between a graph data shard and a storage node, in the first cluster, in which the graph data shard is located;
a data export unit, configured to export the several graph data shards in the target storage node to an intermediate storage device; and
a data import unit, configured to store the graph data exported to the intermediate storage device in at least one storage node in a second cluster based on second graph topology structure information, wherein the second graph topology structure information comprises a correspondence between the graph data shard and a storage node, in the second cluster, in which the graph data shard is to be stored.

8. The apparatus according to claim 7, wherein the graph data of the distributed graph database comprise primary replica graph data and secondary replica graph data, the primary replica graph data comprise several primary replica graph data shards, and the secondary replica graph data comprise several secondary replica graph data shards; and
the at least one target storage node that is determined from the storage node in the first cluster and in which the several graph data shards are located is a storage node that stores the secondary replica graph data shards.

9. The apparatus according to claim 7, wherein the node determining unit is further configured to:
determine the at least one target storage node in which the several graph data shards are located from the storage node in the first cluster based on location information of the storage node in the first cluster and location information of the intermediate storage device.

10. The apparatus according to claim 7, wherein the node determining unit is further configured to:
determine the at least one target storage node in which the several graph data shards are located from the storage node in the first cluster based on a load status of the storage node in the first cluster.

11. An apparatus for data processing for a distributed graph database, comprising at least one processor, a storage coupled to the at least one processor, and a computer program stored in the storage, wherein the at least one processor executes the computer program to implement the data processing method for a distributed graph database according to any one of claims 1 to 6.
